Europäisches Patentamt

European Patent Office

Office européen des brevets

(19)

(11) **EP 1 234 970 A2**

(12) **EUROPEAN PATENT APPLICATION**

(43) Date of publication:
28.08.2002 Bulletin 2002/35

(51) Int Cl.⁷: **F02D 41/18**, F02D 41/22,
F02D 21/08

(21) Application number: 02003899.8

(22) Date of filing: 21.02.2002

(84) Designated Contracting States:
**AT BE CH CY DE DK ES FI FR GB GR IE IT LI LU
MC NL PT SE TR**
Designated Extension States:
**AL LT LV MK RO SI**

(30) Priority: **22.02.2001 JP 2001046467**

(71) Applicant: **TOYOTA JIDOSHA KABUSHIKI
KAISHA
Aichi-ken 471-8571 (JP)**

(72) Inventor: **Morikawa, Atsushi
Toyota-shi, Aichi-ken 471-8571 (JP)**

(74) Representative:
**Leson, Thomas Johannes Alois, Dipl.-Ing.
Tiedtke-Bühling-Kinne & Partner GbR,
TBK-Patent,
Bavariaring 4
80336 München (DE)**

(54) **Fuel supply amount controller for internal combustion engine**

(57) Fuel injection amount is limited below an upper limit value so that the fuel injection amount is prevented from being excessive in relation to the intake air amount supplied to a diesel engine. When a throttle valve or an EGR valve is judged to be malfunctioning, a map for computing the upper limit value is switched from a normal map to an abnormal map. When computed with the abnormal map, the upper limit value is less than when computed with the normal map. As a result, the fuel injection amount is always limited by the appropriate upper limit value. Even if the throttle valve or the EGR valve is malfunctioning, the generation of exhaust smoke is reliably suppressed.

**Description**

The present invention pertains to a fuel supply amount controller that sets an upper limit of fuel supply amount for preventing the amount of fuel supplied to an engine from being excessive relative to the amount of intake air.

Japanese Laid-Open Patent Publication No. 11-36962 discloses a technique for preventing the generation of exhaust smoke during acceleration of a diesel engine that includes a throttle valve and an exhaust gas recirculation (EGR) valve. In the publication, the flow rate of air in the intake system of the engine is adjusted by the throttle valve in accordance with the engine load. Also, the flow rate of recirculated exhaust gas (EGR flow rate) is adjusted by the EGR valve. That is, the amount of intake air drawn into combustion chambers of the engine is adjusted by the throttle valve, and the amount of recirculated exhaust gas (EGR amount) drawn into the combustion chambers is adjusted by the EGR valve. Accordingly, the air-fuel ratio is maintained at an appropriate level, which prevents the generation of exhaust smoke while the vehicle is cruising. The upper limit value of the fuel injection amount is determined based on the actual amount of intake air. Therefore, even during acceleration, the generation of exhaust smoke is prevented regardless of a response delay of the EGR valve and the amount of residual recirculated gas in the intake system.

The upper limit value of fuel injection amount is set relatively high to improve the response of the engine during acceleration. When the vehicle is cruising, the throttle valve and the EGR valve are controlled such that the amount of intake air is sufficient for the amount of fuel injection. In this state, the upper limit value is sufficiently higher than the fuel injection amount. Therefore, if the vehicle is accelerated afterwards, the fuel injection amount is quickly increased to the upper limit value, which permits the vehicle to be quickly accelerated. As the fuel injection amount approaches the upper limit value or reaches the upper limit value during acceleration, exhaust smoke is likely to be generated. However, this state is only temporary and the generation of exhaust smoke practically does not cause any drawbacks.

However, due to adhesion of the valve flaps or to undesirable friction, the opening degree of the EGR valve and the throttle valve may not respond to a control. That is, the valve opening degree is not quickly changed to a target degree. In some cases, the valve opening degree cannot be controlled. In these cases, the intake air amount is less than a target intake air amount, which lowers the upper limit value of fuel injection amount. Thus, even if the vehicle is not being accelerated, the fuel injection amount approaches the upper limit value. This state may continue.

As described above, the upper limit value is set relatively high to improve the response of the engine during acceleration. Thus, if the fuel injection amount continues to be close to the upper limit value, a small fluctuation of the fuel injection amount generates exhaust smoke. Even if the fuel injection amount is stable, exhaust smoke is likely to be generated. Thus, the amount of exhaust smoke is likely to be excessive. If the upper limit value is determined to prevent the generation of exhaust smoke, the acceleration response, or the performance, of the engine will be deteriorated.

If the intake air amount is greater than planned, a sudden and great increase of the fuel amount for improving the response of the engine will not generate excessive smoke. However, if determined based only on the actual intake air amount, an upper limit value does not permit the fuel amount to be sufficiently quickly increased.

Accordingly, it is an objective of the present invention to provide a fuel supply amount controller for an internal combustion engine that permits the engine to operate at the optimum performance while appropriately suppressing the generation of exhaust smoke even if the actual intake air amount is different from a required intake air amount.

To achieve the foregoing and other objectives and in accordance with the purpose of the present invention, an apparatus for controlling the amount of fuel supplied to an internal combustion engine is provided. The apparatus limits the fuel supply amount to no more than an upper limit value to prevent the fuel supply amount from being excessive in relation to the amount of intake air supplied to the engine. The apparatus includes means for judging whether the actual intake air amount is different from a required intake air amount or whether there is a possibility that the actual intake air amount will be different from the required intake air amount. The apparatus also includes means for switching the upper limit value in accordance with the judgment result of the judging means.

The present invention also provides an apparatus for controlling the amount of fuel supplied to an internal combustion engine. The apparatus limits the fuel supply amount to no more than an upper limit value to prevent the fuel supply amount from being excessive in relation to the amount of intake air supplied to the engine. The apparatus includes means for changing the upper limit value according to the difference between the actual intake air amount and a required intake air amount.

Other aspects and advantages of the invention will become apparent from the following description, taken in conjunction with the accompanying drawings, illustrating by way of example the principles of the invention.

The invention, together with objects and advantages thereof, may best be understood by reference to the following description of the presently preferred embodiments together with the accompanying drawings in which:

Fig. 1 is a diagrammatic view illustrating a diesel engine and a control system according to a first embodiment of the present invention;

Fig. 2 is a flowchart showing a routine for controlling fuel injection amount executed by the electronic control unit shown in Fig. 1;

Fig. 3 is a flowchart showing the remainder of the flowchart shown in Fig. 2;

Figs. 4(A), 4(B), 4(C) are maps for computing governor injection amount used in the flowchart of Figs. 2 and 3;

Fig. 5 is a flowchart showing a routine for computing an upper limit value of fuel injection amount executed by the electronic control unit shown in Fig. 1;

Figs. 6(A) and 6(B) are maps for computing the upper limit value of fuel injection amount;

Fig. 7 is a flowchart showing a routine of the opening degree of the throttle valve and the EGR valve executed by the electronic control unit shown in Fig. 1;

Fig. 8 is a map for computing the opening degree of the throttle valve, used in the routine of Fig. 7;

Fig. 9 is a flowchart showing a routine for testing an abnormality in the throttle valve executed by the electronic control unit of Fig. 1;

Fig. 10 is a flowchart showing a routine for testing an abnormality in the exhaust gas recirculation valve shown in Fig. 1;

Fig. 11 is a flowchart showing a routine for computing an upper limit value of fuel injection amount executed by an electronic control unit according to a second embodiment of the present invention;

Fig. 12 is a chart for obtaining a correction factor used in the routine of Fig. 11;

Fig. 13 is a chart for obtaining a correction factor used in a modified embodiment of Figs. 11 and 12;

Fig. 14 is a chart for obtaining a correction factor used in a modified embodiment of Figs. 11 and 12; and

Fig. 15 is a chart for obtaining a correction factor used in a modified embodiment of Figs. 11 and 12;

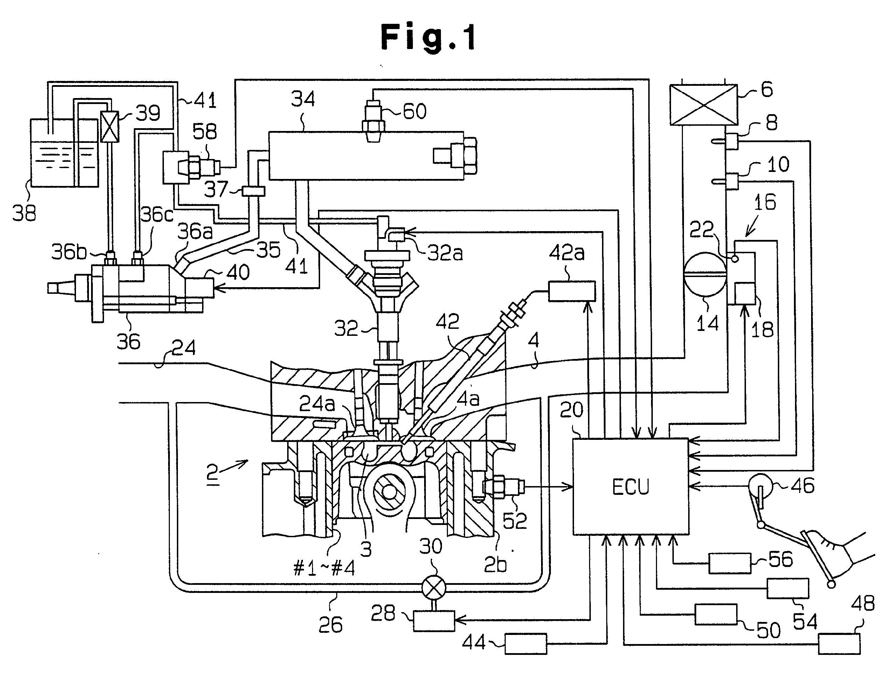

Fig. 1 a diagrammatic view illustrating a diesel engine 2 according to a first embodiment of the present invention. The engine 2 is used for a vehicle. The engine 2 has a cylinder block 2b. Four cylinders #1, #2, #3, and #4 (only one is shown in Fig. 1) are defined in the cylinder block 2b. A combustion chamber 3 is defined in each of the cylinders #1 to #4. Each combustion chamber 3 of the engine 2 is connected to a common intake passage 4 through an intake valve 4a. An air cleaner 6, an air flow sensor 8, an intake air temperature sensor 10, and a throttle valve 14 are located in the intake passage 4 in this order from the upstream side. The air cleaner 6 filters intake air. The air flow sensor 8 detects the flow rate of intake air, or the amount GN of intake air. The throttle valve 14 adjusts the flow rate of intake air in the intake passage 4, or the amount GN of intake air drawn into the combustion chambers 3.

The throttle valve 14 is actuated by a drive mechanism 16. The drive mechanism 16 includes a step motor 18 and gears. The gears connect the step motor 18 with the throttle valve 14. The step motor 18 is controlled by an electronic control unit (ECU) 20, which performs various control procedures of the engine 2. The drive mechanism 16 also includes a complete open switch 22, which is turned on when the throttle valve 14 is fully opened.

Each combustion chamber 3 is also connected to a common exhaust passage 24 through an exhaust valve 24a. An end of an exhaust gas recirculation (EGR) passage 26 is connected to the exhaust passage 24. The other end of the EGR passage 26 is connected a part of the intake passage 4 downstream of the throttle valve 14. An EGR valve 30 is located in the EGR passage 26 to regulate the EGR passage 26. The EGR valve 30 is driven by an actuator 28, which is controlled by the ECU 20. The actuator 28 includes, for example, a diaphragm. The intake air flow rate is controlled by the throttle valve 14, and the EGR flow rate is controlled by the EGR valve 30. Therefore, the ratio of the intake air amount to the EGR amount in the combustion chambers 3 is arbitrary determined. In other words, the intake air amount and the EGR amount are appropriately controlled in the entire operation range of the engine 2.

An injector 32 is located in each combustion chamber 3. Each injector 32 is connected to an injection control electromagnetic valve 32a. The injection of each injector 32 into the corresponding cylinder #1-#4 is controlled by turning one and off the corresponding injection control electromagnetic valve 32a. A single fuel injection of each injector 32 includes a pilot injection and a main injection, which is performed subsequent to the pilot injection.

Each injector 32 is connected to a pressure accumulator, which is a common rail 34 in this embodiment. While any one of the electromagnetic valves 32a is opened, fuel from the common rail 34 is injected from the corresponding injector 32 into the corresponding cylinder #1-#4. The common rail 34 maintains a relatively high pressure that corresponds to the fuel injecting pressure. To maintain such a high pressure, the common rail 34 is connected a discharge port 36a of a supply pump 36 through a supply pipe 35. A check valve 37 is located in the supply pipe 35. The check valve 37 permits fuel to be supplied from the supply pump 36 to the common rail 34 and prevents fuel from flowing from the common rail 34 to the supply pump 36.

The supply pump 36 is connected to a fuel tank 38 through a suction port 36b. A filter 39 is located between the fuel tank 38 and the suction port 36b. The supply pump 36 draws fuel from the fuel tank 38 through the filter 39. The supply pump 36 includes a plunger and a cam. The cam is actuated in synchronization with the engine 2 and reciprocates the plunger. The plunger increases the pressure of fuel to a required level and then sends pressurized fuel to the common rail 34.

A pressure control valve 40 is located in the vicinity of the discharge port 36a of the supply pump 36. The pressure control valve 40 controls the injection pressure, or the pressure of fuel supplied from the discharge port 36a to the common rail 34. When the control valve 40 is open, fuel that is not discharged from the discharge port 36a, or surplus fuel, is returned to the fuel tank 38 through a return port 36c of the supply pump 36 and a return pipe 41.

A glow plug 42 is located in each combustion chamber 3. Each glow plug 42 is connected to a glow relay 42a. Each glow plug 42 receives current from the corresponding glow relay 42a and glows immediately before the engine 2 is started.
Atomized fuel is sprayed onto the glowing glow plug 42, which promotes ignition and combustion. In this manner, the glow plugs 42 function as an ancillary equipment for starting the engine 2.

An engine speed sensor 44 is connected to the engine 2 and sends a signal representing the rotation speed of the engine 2 to the ECU 20. Specifically, the engine 2 has an output shaft (not shown), to which a rotor (not shown) is coupled. The rotor has circumferential projections. The engine speed sensor 44 has an electromagnetic pickup that detects the projections and outputs pulse signals. The pulse signals represent the rotation speed of the rotor, or the engine speed.

The ECU 20 receives a signal representing the amount of intake air from the air flow sensor 8, and a signal representing the temperature of intake air from the intake temperature sensor 10. The ECU 20 is also receives a signal representing the depression degree of an acceleration pedal detected by an acceleration pedal sensor 46, a signal representing the on-off state of an ignition switch 48, a signal representing the on-off state of a starter switch 50, a signal representing the temperature of coolant detected by a coolant temperature sensor 52 located in the cylinder block 2b, a signal representing the shift position detected by a shift position sensor 54 located in a transmission (not shown), a signal representing the vehicle speed detected by a vehicle speed sensor 56, a signal representing the temperature of fuel detected by a fuel temperature sensor 58 located in the return pipe 41, and a signal representing a fuel pressure (injection pressure PC) detected by a fuel pressure sensor 60 located in the common rail 34.

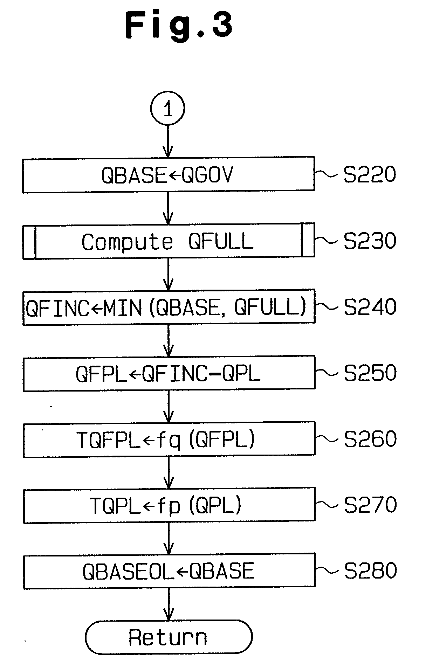

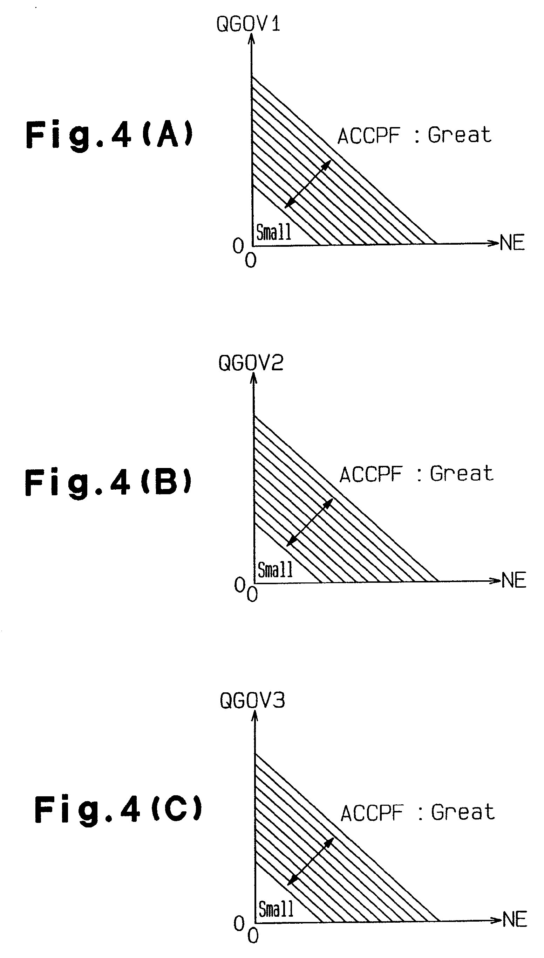

A fuel injection amount control procedure, which is executed by the ECU 20, will now be described. Figs. 3 and 4 are flowchart showing the fuel injection amount control procedure. The procedure of Figs. 3 and 4 is executed in an interrupting manner at predetermined crank angle increments, or at every explosion stroke. Each step in the procedure is represented by a letter "S" accompanied by a number.

When the procedure is started, ECU 20 stores various information in the work area of a RAM in step S110. The stored information includes an intake air amount GN detected by the air flow sensor 8, the engine speed NE detected by the engine speed sensor 44, the acceleration pedal depression degree ACCPF detected by the acceleration pedal sensor 46, the shift position SFT detected by the shift position sensor 54, and the vehicle speed SPD detected by the vehicle speed sensor 56.

In step S120, the ECU 20 computes an idling governor injection amount QGOV1 by referring to an idling governor map shown in Fig 4(A) based on the engine speed NE and the acceleration pedal depression degree ACCPF. The idling governor injection amount QGOV1 is suitable for a state where the engine 2 is idling. The map of Fig. 4(A) determines the value of the idling governor injection amount QGOV1 in relation to parameters, or the engine speed NE and the acceleration pedal depression degree ACCPF. The map of Fig. 4(A) is previously obtained through experiments and stored in the ROM of the ECU 20. The idling governor injection amount QGOV1 is defined discretely in the map. Therefore, when the parameters do not correspond to any value in the map, a supplemental computation is executed for obtaining the idling governor injection amount QGOV1. The maps discussed below have the same construction, and similar supplemental computation is executed for the maps.

In step S130, the ECU 20 computes a non-idling governor injection amount QGOV2 by referring to a non-idling governor map shown in Fig 4(B). The non-idling governor injection amount QGOV2 is suitable for a state where the engine 2 is running in any state other than idling state. The map of Fig. 4(B) determines the value of the non-idling governor injection amount QGOV2 in relation to parameters, or the engine speed NE and the acceleration pedal depression degree ACCPF. In step S140, the ECU 20 computes an auxiliary governor injection amount QGOV3 by referring to an auxiliary governor map shown in Fig 4(C) based on the engine speed NE and the acceleration pedal depression degree ACCPF. In the auxiliary governor map, the engine speed NE and the acceleration pedal depression degree ACCPF are used as parameters. The auxiliary governor injection amount QGOV3 is used for adding an auxiliary property to the non-idling governor injection amount QGOV2.

In step S150, the ECU 20 judges whether the engine 2 is in a state other than idling state. For example, if the vehicle speed SPD is substantially 0km after the engine 2 is warmed and the acceleration pedal depression degree ACCPF detected by the pedal sensor 46 is less than a predetermined degree, which is close to the full closed state, the engine 2 is judged to be idling. In other cases, the engine 2 is judged to be in a non-idling state.

If the engine 2 is running at a state that is not the idling state, the outcome of step S150 is positive, and the ECU 20 proceeds to step S190. In step S190, the ECU 20 computes a governor injection amount QGOV through the following equation 1.

[Equation 1]

$$QGOV \leftarrow MAX(QGOV1+QII+QIP, MAX(QGOV2, QGOV3)+QIPB)$$

QIP is a compensation value that is added to the idling governor injection amount QGOV1 when there is a load such as the air conditioner during idling. QIPB is a compensation value that is added to the non-idling governor injection amount QGOV2 or the auxiliary governor injection amount QGOV3 when there is a load such as the air conditioner when the engine 2 is in the non-idling state, or is running in a state other than the idling state. MAX is an operator for extracting the maximum value of the item in the accompanying parentheses. QII is an idling injection amount compensation value, which is added to the idling governor injection amount QGOV1 when the engine 2 is idling. The value QII will be described below.

If the engine 2 is idling, or if the outcome of step S150 is negative, the ECU 20 proceeds to step S160. In step S160, the ECU 20 computes a speed deviation NEDL, which is the difference between a target speed NTRG during idling and the actual engine speed NE, by the following equation (2).

[Equation 2]

$$NEDL \leftarrow NTRG-NE$$

In step S170, the ECU 20 computes an injection correction value QIIDL by referring to a map in which the speed deviation NEDL is used as a parameter. Then, in step S180, the ECU 20 computes an idling injection correction value QII based on the injection correction value QIIDL through the following equation 3.

[Equation 3]

$$QII \leftarrow QII \pm QIIDL$$

QII of the right side of the equation represents the idle injection correction value QII that was computed in the previous control cycle. When NTRG≥NE is satisfied, ±QIIDL represents +QIIDL. When NTRG<NE is satisfied, ±QIIDL represents -QIIDL.

After step S180, the ECU 20 computes the governor injection amount QGOV through the equation 1 in step S190.

In step S200, the ECU 20 judges whether the vehicle is accelerating or decelerating based on whether the governor injection amount QGOV is different from a basic injection amount QBASEOL, which was computed in the previous control cycle. The basic injection amount QBASEOL corresponds to the governor injection amount QBOV which was computed in the previous control cycle.

If the outcome of step S200 is positive, or if the vehicle is accelerating or decelerating, the ECU 20 proceeds to step S210 and executes a change suppression procedure of the governor injection amount QGOV. The change suppression procedure is executed for preventing shock due to a sudden change of the governor injection amount QGOV. If the governor injection amount QGOV computed in step S190 is greatly different from the basic injection amount QBASEOL, the governor injection amount QGOV is corrected for reducing shock.

In step S220, which is shown in Fig. 3, the ECU 20 sets the governor injection amount QGOV at the basic injection amount QBASE. If the ECU 20 judges that the vehicle is not accelerating or decelerating in step S200, or if the outcome of step S200 is negative, the ECU 20 directly proceeds to step S220.

After step S220, the ECU 20 proceeds to step S230 and executes an upper limit value computation procedure for computing an upper limit value QFULL. This procedure will be discussed below. The ECU 20 then proceeds to step S240. In step S240, the ECU 20 computes a final basic injection amount QFINC from the basic injection amount QBASE by the following equation 4.

[Equation 4]

$$QFINC \leftarrow MIN(QBASE, QFULL)$$

MIN is an operator for extracting the minimum value of the item in the accompanying parentheses. When the basic injection amount QBASE surpasses the upper limit value QFULL, the final basic injection amount QFINC is set at the upper limit value QFULL.

In step S250, the ECU 20 subtracts a pilot injection amount QPL from the final basic injection amount QFIN and sets the resultant as a main injection amount QFPL through the following equation 5.

[Equation 5]

$$QFPL \leftarrow QFINC\text{-}QPL$$

In step S260, the ECU 20 computes a main injection period TQFPL based on the main injection amount QFPL by using a predetermined function fq. In step S270, the ECU 20 computes a pilot injection period TQPL based on the pilot injection amount QPL by using a predetermined function fp. Each of the main injection period TQFPL and the pilot injection period TQPL may be computed by referring to a predetermined map. In step S280, the ECU 20 substitutes the current basic injection amount QBASE for the basic injection amount QBASEOL of the previous control cycle. The ECU 20 then temporarily suspends the procedure.

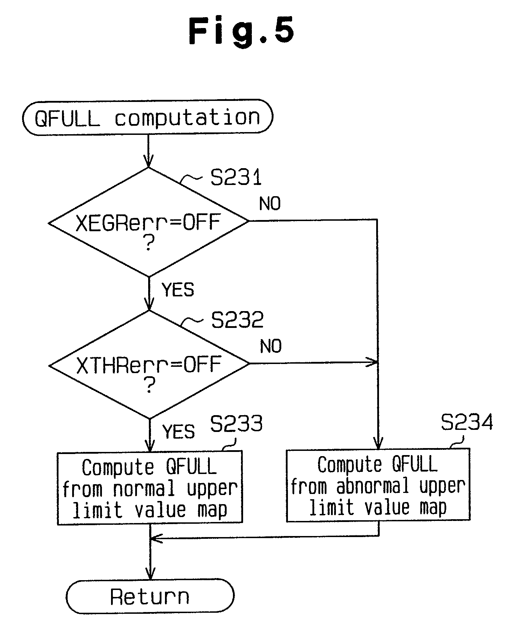

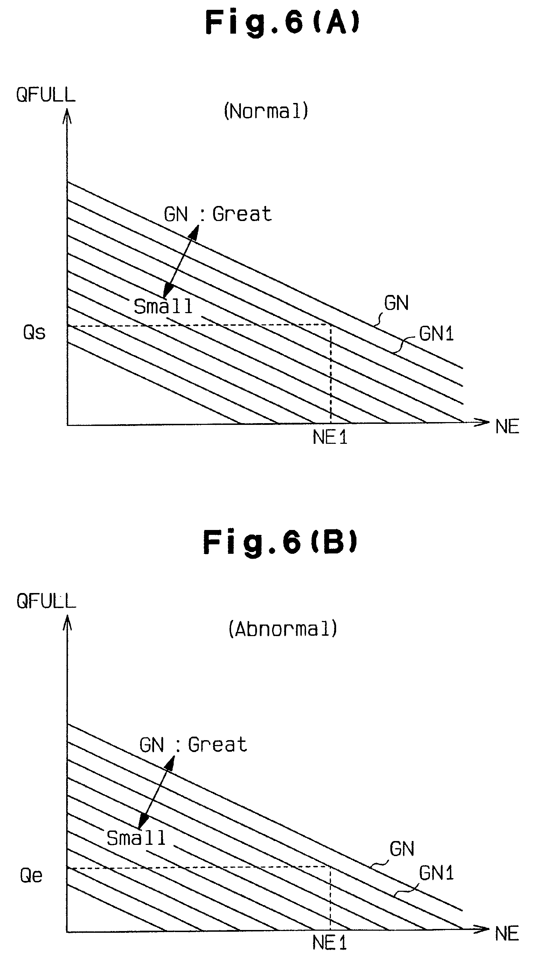

The upper limit value computation procedure executed in step S230 will now be described with reference to Fig. 5. In this procedure, the ECU 20 first judges whether the EGR valve 30 is functioning normally in step S231. Specifically, the ECU 20 judges whether a flag XEGRerr, which indicates that there is an abnormality in the EGR valve 30, is off. If the flag XEGRerr is off, or if the outcome of step S231 is positive, the ECU 20 proceeds to step S232. In step S232, the ECU 20 judges whether the throttle valve 14 is functioning normally. Specifically, the ECU 20 judges whether a flag XTHRerr, which indicates that there is an abnormality in the throttle valve 14, is off. If the flag XTHRerr is off, or if the outcome of step S232 is positive, the ECU 20 proceeds to step S233. In step S233, the ECU 20 computes the upper limit value QFULL based on the engine speed NE and the intake air amount GN by referring to a normal upper limit value map, which is shown in Fig. 6(A). Thereafter, the ECU 20 exits the procedure.

If there is an abnormality in the EGR valve 30, or if the flag XEGRerr is on in step S231, the ECU 20 proceeds to step S234. Also, if there is an abnormality in the throttle vale 14, or if the flag XTHrerr is on in step S232, the ECU 20 proceeds to step S234. In step S234, the ECU 20 computes the upper limit value QFULL based on the engine speed NE and the intake air amount GN by referring to an abnormal upper limit value map, which is shown in Fig. 6(B).

Compared to the normal upper limit value map of Fig. 6(A), the upper limit value QFULL obtained from the abnormal upper limit value map of Fig. 6(B) is smaller. That is, given the same values of the engine speed NE and the intake air amount GN, the upper limit value QFULL computed by referring to the abnormal upper limit value map of Fig. 6(B) is smaller than the upper limit value QFULL computed by referring to the normal limit value map of Fig. 6(A). For example, when the engine speed is NE1 and the intake air amount is GN1, the upper limit value QFULL according to the normal upper limit value map of Fig. 6(A) is Qs, and the upper limit value QFULL according to the abnormal upper limit value map of Fig. 6(B) is Qe, which is smaller than Qs (Qe<Qs).

The upper limit value QFULL computed by referring to the normal upper limit value map of Fig. 6(A) is relatively high so that the acceleration performance is improved. Specifically, value QFULL based on the map of Fig. 6(A) is determined such that the fuel concentration can be set higher than the fuel concentration required for preventing the generation of smoke at a cruising speed. Accordingly, when the driver attempts to accelerate the vehicle, the change of the intake air amount and the change of the EGR amount delayed in relation to an increase of the fuel injection amount, which lowers the air-fuel ratio and tends to generate exhaust smoke. However, since acceleration is temporary, the smoke does not cause any drawbacks.

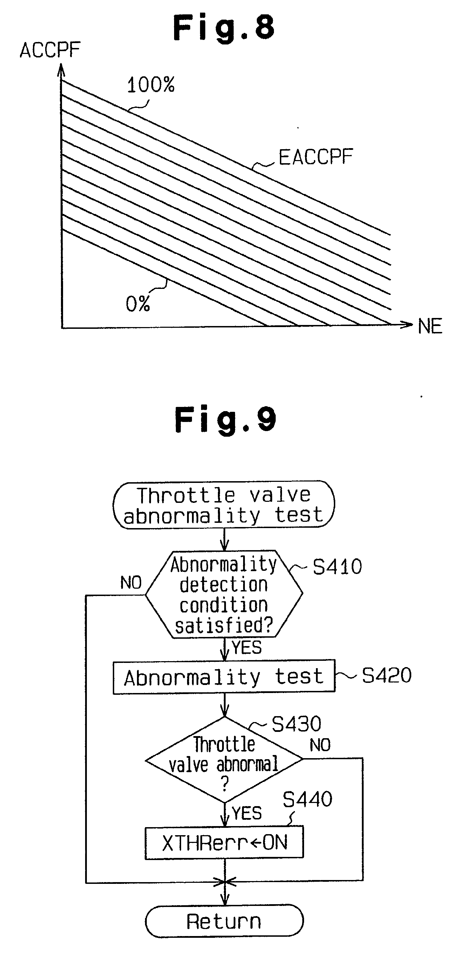

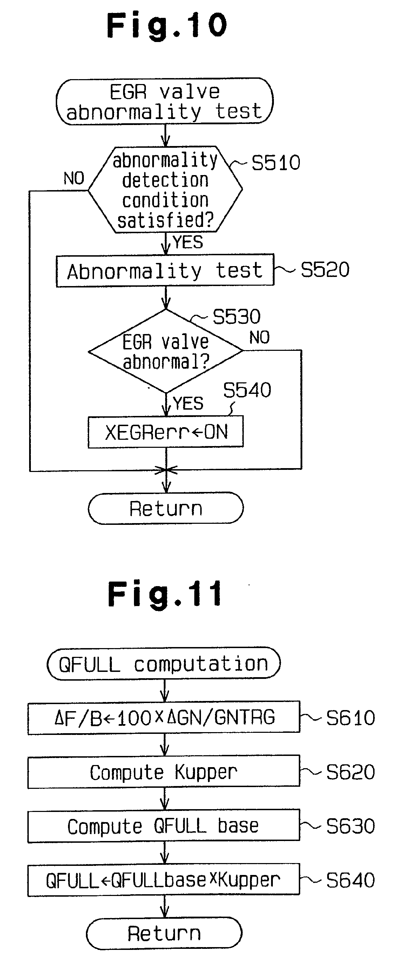

When the ECU 20 judges that there is an abnormality in the throttle valve 14 or in the EGR valve 30 through a throttle valve abnormality testing procedure or an EGR valve abnormality testing procedure, that is, when the outcome of step S231 or S232 is negative, the upper limit value map is switched. These procedures will be described below with reference to Figs. 9 and 10. Specifically, the upper limit value QFULL is computed by referring to the map of the abnormal upper limit value map of Fig. 6(B) in step S234. The abnormal upper limit value map is determined such that the upper limit value is smaller than that of the normal limit value map. Particularly, the abnormal upper limit value map is designed such that the upper limit value QFULL is lower than in the normal upper limit value map. That is, when computed based on the abnormal upper limit value map, the upper limit value QFULL prevents the fuel concentration from being higher than a level that is required for preventing generation of exhaust smoke during acceleration. The abnormal upper limit value map is designed rather to prevent the generation of exhaust smoke during acceleration than to improve the acceleration performance but .

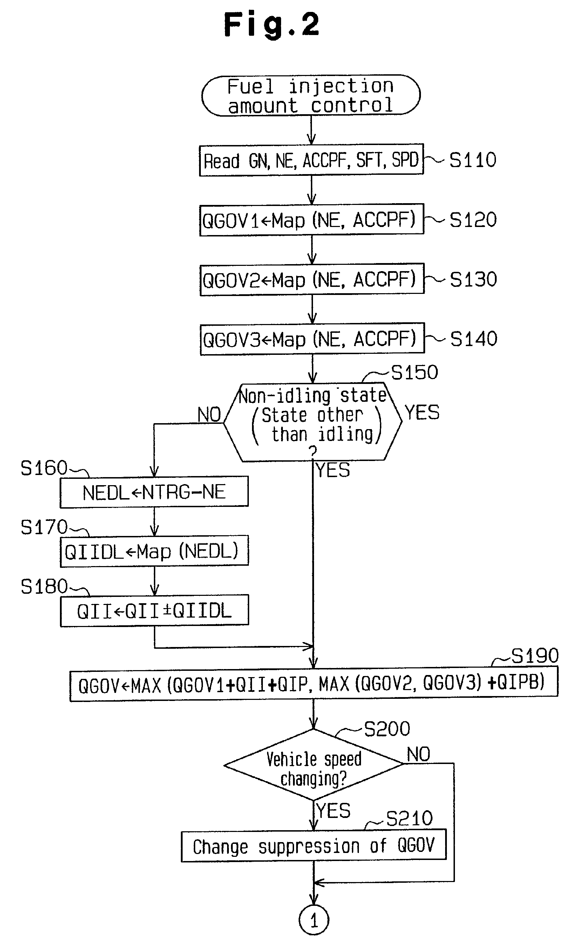

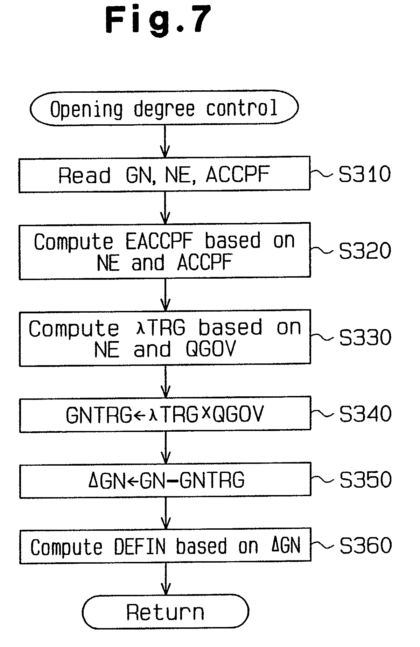

A procedure for controlling the opening degree of the throttle valve 14 and the EGR valve 30 will now be described. This procedure is executed according to the flowchart shown in Fig. 7. The procedure of Fig. 7 is repeated at the same cycle as the fuel injection amount control procedure of Figs 2 and 3.

When starting the routine of Fig. 7, the ECU 20 stores necessary data in the RAM in step S310. The data includes the intake air amount GN, the engine speed NE, the acceleration pedal depression degree ACCPF. In step S320, the ECU 20 computes the throttle valve opening degree EACCPF based on the engine speed NE and the acceleration pedal depression degree ACCPF by referring to a throttle valve opening degree map of Fig. 8. The ECU 20 sets the throttle valve opening degree as a required value used in a throttle valve control procedure (not shown). Accordingly, the throttle valve 14 is actuated such that its opening degree seeks the throttle valve opening degree EACCPF. In step S320, if the increase rate of the acceleration pedal depression degree ACCPF is greater than a predetermined level, the ECU 20 judges that the driver attempts to accelerate the vehicle. In this case, the throttle valve opening degree EACCPF is set to 100% (fully open).

In step S330, the ECU 20 computes a target air-fuel ratio λTRG based on the engine speed NE and the governor injection amount QGOV, which is computed in the fuel injection amount control procedure of Figs. 2 and 3, by referring to a target air-fuel ratio map (not shown). In step S340, the ECU 20 multiplies the governor injection amount QGOV by the target air-fuel ratio λTRG and sets the resultant as a target intake air amount GNTRG.

Then, in step S350, the ECU 20 computes the difference ΔGN between the target intake air amount GNTRG and the actual intake air amount GN by the following equation 6.

[Equation 6]

$$\Delta GN \leftarrow GN\text{-}GNTRG$$

In step S360, the ECU 20 computes an EGR opening degree DEFIN based on the intake air amount difference ΔGN, and sets the EGR opening degree DEFIN as a demand value of an EGR valve opening control procedure (not shown). Specifically, the ECU 20 computes a correction value in accordance with the intake air amount difference ΔGN and accumulates the correction value. Then, the ECU 20 adds the accumulated correction value to the EGR opening degree DEFIN of the previous control cycle or multiplies the EGR opening degree DEFIN of the previous control cycle by the integration. The ECU 20 sets the resultant as a new EGR opening degree DEFIN. If there is no abnormality in the throttle valve 14 and in the EGR valve 30, and the engine 2 is running in a stable manner, the difference ΔGN approaches zero (ΔGN=0).

Consequently, the EGR valve 30 is controlled such that its opening seeks the EGR opening degree DEFIN, which is computed in step S360. In step S360, if the acceleration pedal depression degree ACCPF is increasing at a rate that is greater than a predetermined value, the ECU 20 judges that the driver attempts to accelerate the vehicle. In this case, the EGR opening degree DEFIN is set to 0%, or fully closed. The ECU 20 then temporarily suspends the current procedure. Since the actual intake air amount GN represents the actual EGR amount, and the target intake air amount GNTRG represents the target EGR amount, the difference ΔGN represents the difference between the actual EGR amount and the target EGR amount. Therefore, steps S330-S360 correspond to a procedure in which the EGR valve 30 is feedback controlled such that the actual EGR amount seeks the target EGR amount.

As described above, when the vehicle is cruising, the air-fuel ratio is properly controlled through the opening degree control procedure for the throttle valve 14 and the EGR valve 30, which prevents the generation of exhaust smoke. When the driver attempts to accelerate the vehicle, the fuel injection amount is rapidly increased. Accordingly, the throttle valve opening EACCPF is maximized (EACCPF=100%) and the EGR opening degree DEFIN is minimized (DEFIN=0%), so that the intake air amount is quickly increased and the EGR amount is quickly decreased.

A procedure for testing an abnormality in the throttle valve 14 will now be described with reference to Fig. 9. The ECU 20 repeatedly executes the routine of Fig. 9 at short intervals. When starting the routine of Fig. 9, the ECU 20 judges whether an abnormality detection condition is satisfied in step S410. Specifically, the ECU 20 judges that the detection condition is satisfied when no abnormality has been detected and actuating throttle valve 14 in an abnormality detection procedure will scarcely influence the state of the engine 2. The abnormality detection procedure will be discussed below. If the detection condition is not satisfied, the outcome of step S410 is negative. In this case, the ECU 20 temporarily suspends the current routine.

If the ECU 20 judges that the actuation of the throttle valve 14 for the abnormality detection will scarcely influence the state of the engine 2, the ECU 20 judges that the detection condition is satisfied. In this case, the outcome of step S410 is positive, and the ECU 20 proceeds to step S420 to start the abnormality detection procedure.

In the throttle valve abnormality detection procedure of step S420, the ECU 20 commands the throttle valve 14 to open and close and judges whether the throttle valve 14 is actually opens and closes, accordingly. For example, a limit switch that is turned on and off when the throttle valve 14 passes a predetermined opening degree, is located in the vicinity of the throttle valve 14, and the ECU 20 monitors whether the state of the limit switch is changed when the ECU 20 commands the throttle valve 14 to open and close. If the state of the limit switch is changed, the ECU 20 judges that the throttle valve 14 is operating normally. If the state of the limit switch is not changed, the ECU 20 judges that there is an abnormality in the throttle valve 14.

If there is no abnormality, or if the outcome of step S430 is negative, the ECU 20 temporarily suspends the current routine.

If there is an abnormality, or if the outcome of step S430 is positive, the ECU 20 proceeds to step S440, and sets the flag XTHRerr on. The flag STHRerr is stores in a nonvolatile RAM area of the ECU 20 and its initial value is off. After step S440, the ECU 20 temporarily suspends the procedure.

The EGR valve abnormality testing procedure will now be described with reference to the flowchart of Fig. 10. The ECU 20 repeatedly executes the routine of Fig. 10 at short intervals. When starting the routine of Fig. 10, the ECU 20 judges whether an abnormality detection condition is satisfied in step S510. Specifically, the ECU 20 judges that the detection condition is satisfied when no abnormality has been detected and actuating the EGR valve 30 in an abnormality detection procedure will scarcely influence the state of the engine 2. The abnormality detection procedure will be discussed below. If the detection condition is not satisfied, the outcome of step S510 is negative. In this case, the ECU 20 temporarily suspends the current routine.

If the ECU 20 judges that the actuation of the EGR valve 30 for the abnormality detection will scarcely influence the state of the engine 2, the ECU 20 judges that the detection condition is satisfied. In this case, the outcome of step S510 is positive, and the ECU 20 proceeds to step S520 to start the abnormality detection procedure.

In the EGR valve abnormality detection procedure of step S520, the ECU 20 commands the EGR valve 30 to open and close, and judges whether the EGR valve 30 actually opens and closes, accordingly. The EGR valve 30 is fully opened when the vehicle is decelerating. The ECU 20 commands the EGR valve 30 to gradually close from the fully open state and judges whether the EGR valve 30 is actually closing according to the command by referring to the change of the intake air amount GN. If the change of the intake air amount GN corresponds to the closing amount of the EGR valve 30, the ECU 20 judges that the EGR valve 30 is operating normally. If the intake air amount GN does not corresponds to the closing amount of the EGR valve 30, the ECU 20 judges that there is an abnormality in EGR valve 30.

If there is no abnormality, or if the outcome of step S530 is negative, the ECU 20 temporarily suspends the current routine.

If there is an abnormality, or if the outcome of step S530 is positive, the ECU 20 proceeds to step S540, and sets the flag XEGRerr on. The flag XEGRerr is stores in the nonvolatile RAM area of the ECU 20 and its initial value is off. After step S540, the ECU 20 temporarily suspends the procedure.

The first embodiment has the following advantages.

(A) The throttle valve opening degree EACCPF is set according to the engine speed NE and the acceleration pedal depression degree ACCPF in step S320. The EGR opening degree DEFIN is set according to the engine speed NE, the intake air amount GN, and the governor injection amount QGOV in steps S330 to S360. If the throttle valve 14 is stuck at a position that opens narrower than the throttle valve opening degree EACCPF due to an abnormality or if the EGR valve 30 is stuck at a position that opens wider than the EGR opening degree DEFIN due to an abnormality, the intake air amount to the combustion chambers 3 may continue to be less than the target intake air amount GNTRG, which is determined based on the governor injection amount QGOV. In this case, the air-fuel ratio will continue to be lower than the appropriate level.
In other words, the fuel concentration continues to be excessive.

Even if the throttle valve 14 or the EGR valve 30 have an abnormality, the upper limit value QFULL, which is obtained from the upper limit value map for normal operation shown in Fig. 6(A), is set relatively low to respond to a decrease of the intake air amount. However, the upper limit value QFULL is not set to completely prevent the generation of exhaust smoke. Instead, the upper limit value QFULL is set higher than a level to prevent the generation of exhaust smoke so that the acceleration performance of the vehicle is maintained. In other words, the upper limit value QFULL permits the air-fuel ratio to be lower than that required for preventing the generation of exhaust smoke.

Thus, if the map of Fig. 6(A) is used when the throttle valve 14 or the EGR valve 30 has an abnormality, the abnormality will cause the air-fuel ratio to be excessively low. Accordingly, exhaust smoke may continue to be generated.

Therefore, in the first embodiment, when an abnormality at the throttle valve 14 or the EGR valve 30 is detected, in other words, when the generation of exhaust smoke is likely to become excessive, the map of Fig. 6(B) is used for computing the upper limit value instead of the map of Fig. 6(A). The map of Fig. 6(B) is designed for suppressing the generation of exhaust smoke rather than for maintaining the acceleration of the vehicle. That is, when computed by the map of Fig. 6(B), the upper limit value QFULL is lower than when computed by the map of Fig. 6(A).

In this manner, the fuel injection amount is limited by the upper limit value QFULL, which is set appropriate for suppressing the generation of exhaust smoke. When the actual intake air amount is or will be different from a required air intake air amount due to an abnormality, the generation of smoke is reliably suppressed while maintaining the performance of the engine 2 to a sufficient level.

(B) When the throttle valve 14 or the EGR valve 30 has an abnormality, the intake air amount cannot be appropriately increased during acceleration of the vehicle unless the throttle valve 14 is stuck at the maximum opening state or the EGR valve 30 is stuck at the maximum closing state.

Therefore, the amount of generated exhaust smoke is likely to be increased than the normal state. In this case, the map of Fig. 6(B) is used and the generation of the exhaust smoke is prevented.

As described above, when there is an abnormality in the system or mechanism that treat intake air amount, the generation of exhaust smoke is reliably suppressed. Also, the performance of the engine 2 is maintained at least until the vehicle reaches a repair shop.

(C) When there is an abnormality and the upper limit value QFULL is computed by the map of Fig. 6(B), the acceleration performance of the vehicle is lowered. However, in this case, since there is an abnormality in the throttle valve 14 or in the EGR valve 30, the lowered acceleration performance is advantageous in notifying the driver of the abnormality at an early stage.

A second embodiment of the present invention will now be described. Instead of the upper limit value computation procedure of Fig. 5, a procedure shown in Fig. 11 is executed in the second embodiment. Also, the map of Fig. 6(B) is not used in the second embodiment. Further, the throttle valve abnormality testing procedure (Fig. 9) and the EGR valve abnormality testing procedure (Fig. 10) are not executed in the second embodiment. Other structures are the same as the first embodiment.

The upper limit value computation procedure of Fig. 11 will now be described. When starting the routine of Fig. 11, the ECU 20 computes the ratio $\Delta F/B$ of the intake air amount difference $\Delta GN$ to the target intake air amount GNTRG by the following equation 7 in step S610. The target intake air amount GNTRG and the intake air amount difference $\Delta GN$ are computed in steps S340 and S350 of the opening degree control routine of Fig. 7, respectively.

[Equation 7]

$$\Delta F/B \leftarrow 100 * \Delta GN/GNTRG$$

The ratio $\Delta F/B$ represents the feedback deviation of the intake air amount GN. That is, the ratio $\Delta F/B$ represents the amount of correction that has not been achieved through the intake air amount feedback procedure of steps S330-S360 in the procedure shown in Fig. 7. Therefore, even if the vehicle is cruising, the throttle valve 14 or the EGR valve 30 is not operating properly due to friction if the feedback deviation $\Delta F/B$ is not substantially 0%. If the absolute value of the feedback deviation $\Delta F/B$ is great during cruising, the throttle valve 14 or the EGR valve 30 is judged to be stuck.

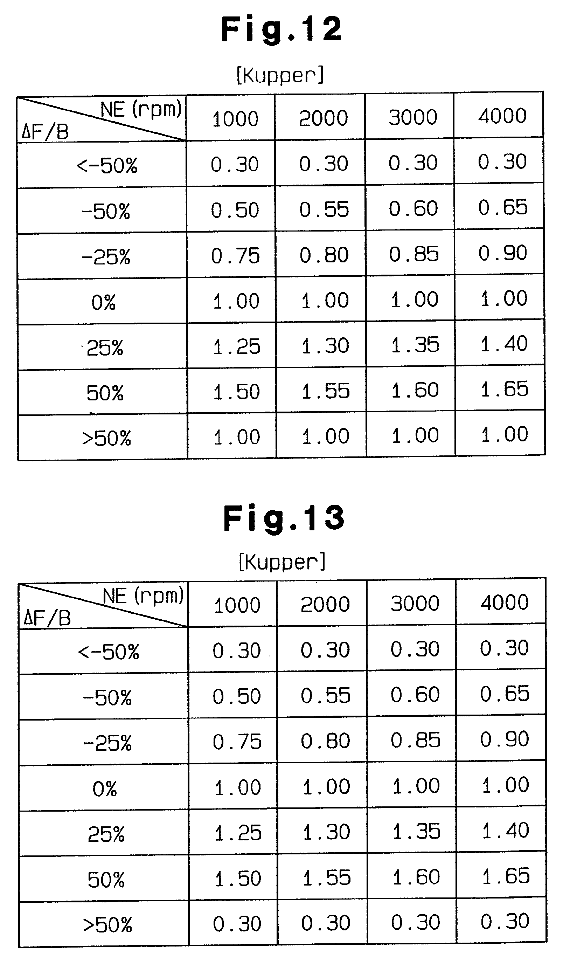

The ECU 20 computes a correction factor Kupper in step S620 by a correction factor chart shown in Fig. 12. In the chart of Fig. 12, the throttle valve 14 or the EGR valve 30 is judged to be stuck when the feedback deviation $\Delta F/B$ is lower than -50% or higher than 50%.

In step S630, the ECU 20 computes a basic upper limit value QFULLbase based on the engine speed NE and the intake air amount GN by referring to the normal upper limit value map shown in Fig. 6(A).

In step S640, the ECU 20 adjusts the basic upper limit value QFULLbase by using the correction factor Kupper to obtain the upper limit value QFULL through the following equation 8. Then, the ECU 20 temporarily suspends the current routine.

[Equation 8]

$$QFULL \leftarrow QFULLbase * Kupper$$

As described above, the upper limit value QFULL is computed through the procedure of Fig. 11. If the feedback deviation $\Delta F/B$ is 0% or in the vicinity of 0%, the throttle valve 14 and the EGR valve 30 are operating normally. Therefore, the correction factor Kupper is computed as 1.00 or a value close to 1.00 by the chart of Fig. 12, and the basic upper limit value QFULLbase that is computed through the normal upper limit value map shown in Fig. 6(A) or a proximate value is used as the upper limit value QFULL.

Even if the throttle valve 14 and the EGR valve 30 are not stuck, the operation of the valves 14, 30 may be slowed or be inaccurate. In such cases, the feedback deviation $\Delta F/B$ is in a range between -50% and 50% excluding a small range including 0%. At this time, the correction factor Kupper is determined based on the correction factor map of Fig. 12 in accordance with the feedback deviation $\Delta F/B$ and the engine speed NE.

That is, if the feedback deviation $\Delta F/B$ has a negative value while in the range between -50% and 50%, the correction factor Kupper decreases from 1.00 as the value of the $\Delta F/B$ is lowered. If the feedback deviation $\Delta F/B$ has a positive value, the correction factor Kupper increases from 1.00 as the feedback is increased. The correction factor Kupper is increased as the engine speed NE is increased. This is because the influence of excessive fuel to the generation of exhaust smoke is decreased as the engine speed NE increases.

When the operation of the throttle valve 14 or the EGR valve 30 is slowed or inaccurate to a level that indicates that the valve 14, 30 is stuck, the feedback deviation ΔF/B is greater than 50% or less than -50% (ΔF/B>50%, ΔF/B<-50%). In these cases, the correction factor Kupper is set to a value that corresponds to the stuck state of the valve 14, 30 based on the chart of Fig 12. Specifically, the correction factor Kupper is set to 0.30 if the feedback deviation ΔF/B is less than -50%, and is set to 1.00 if the feedback deviation ΔF/B is greater than 50%.

The second embodiment has the following advantages.

(A) The EGR valve 30 is feedback controlled in steps S330 to S360. In other words, the ERG valve 30 is feedback controlled such that the actual EGR amount seeks the target EGR amount, which is set according to the running state of the engine 2. The feedback deviation ΔF/B represents the difference between the actual intake air amount GN and the target intake air amount GNTRG, that is, the difference between the actual EGR amount and the target EGR amount. Therefore, if the feedback deviation ΔF/B has a negative value, the intake air amount is judged to be less than a level that is required. In this case, the upper limit value QFULL is set lower than the normal condition.

The upper limit value QFULL is set to a level that suppresses the acceleration performance and prevents the generation of exhaust smoke. Therefore, as the advantage (A) of the first embodiment, the upper limit value QFULL is appropriate for the injection. This reliably suppresses the generation of exhaust smoke while maintaining the performance of the engine 2 to a sufficient level.

When the feedback deviation ΔF/B has a positive value, the intake air amount is judged to be greater than a required value. In this case, the upper limit value QFULL is set higher than the normal condition. When the feedback deviation ΔF/B has a positive value, the EGR amount is too low and the combustion quality in the combustion chambers 3 is high. Therefore, if the upper limit value QFULL, which is set high in accordance with the intake air amount GN, is further increased, the generation of exhaust smoke is not increased. Thus, the generation of exhaust smoke is prevented and the injection is sufficiently increased during acceleration.

Consequently, when the actual intake air amount is different from the required intake air amount, the second embodiment prevents an excessive generation of exhaust smoke while maintaining the performance of the engine 2 to a sufficient level.

(B) When the throttle valve 14 or the EGR valve 30 is stuck, the feedback deviation ΔF/B is less than -50%. In this case, the correction factor Kupper is always set to 0.30. Accordingly, the corrected upper limit value QFULL is less than the values shown in the map of Fig. 6(A), which is used in the normal condition. In other words, the upper limit value QFULL is determined for preventing the generation of smoke rather than for improving the acceleration performance of the vehicle. Thus, when there is an abnormality in the throttle valve 14 or in the EGR valve 30, the second embodiment reliably suppresses the generation of exhaust smoke while permitting the vehicle to limp-home to a service station.

In this case, the upper limit value QFULL is corrected to be a lower value, which deteriorates the acceleration performance. However, the lowered acceleration performance is advantageous in notifying the driver of the abnormality at an early stage.

When the feedback deviation ΔF/B is greater than 50%, the valve 14 or 30 is stuck. In this case, the correction factor Kupper is always set to 1.00. Accordingly, the corrected upper limit value QFULL is maintained to a value computed by using the map of Fig. 6(A). When the valve 14, 30 is stuck, the intake air amount GN is excessive. In such a case, the upper limit value QFULL is maintained to a level of the normal condition. This maintains the normal acceleration performance and permits the vehicle to quickly limp-home to a service station.

It should be apparent to those skilled in the art that the present invention may be embodied in many other specific forms without departing from the spirit or scope of the invention. Particularly, it should be understood that the invention may be embodied in the following forms.

In the second embodiment, when the feedback deviation ΔF/B is greater than 50%, the valve 14, 30 is judged to be stuck and the correction factor Kupper is set to 1.00. Accordingly, the upper limit value QFULL shown in the map of Fig. 6(A) is used without being changed. However, as shown in Fig. 13, the correction factor Kupper may be set to 0.30 when the feedback deviation ΔF/B is greater than 50%. Alternatively, the correction factor Kupper may be less than 1.00 and is greater or equal to 0.30 (1.00>Kupper≥0.30).

As in the case when the feedback deviation ΔF/B is less than -50%, the lowered acceleration notifies the driver of the abnormality.

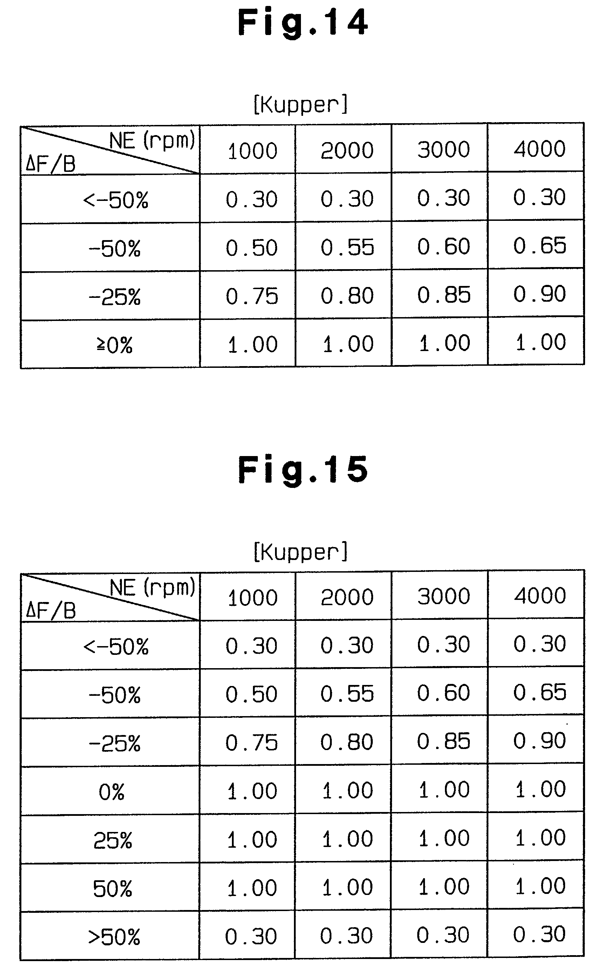

When the feedback deviation ΔF/B is equal to or greater than 0%, the intake air amount is sufficient. Thus, as shown in Fig. 14, the correction factor Kupper may be set to 1.00 when the feedback deviation ΔF/B is equal to or greater than 0%. Also, when the feedback deviation ΔF/B satisfies an equation 0%≤ΔF/B≤50%, the intake air amount is sufficient. Thus, when the feedback deviation ΔF/B satisfies the equation 0%≤ΔF/B≤50%, the correction factor Kupper may be set to 1.00, and when the feedback deviation ΔF/B is greater than 50%, the correction factor Kupper may be set to 0.30.

The actual opening degree of the throttle valve 14 may be detected by a throttle sensor, and the actual opening degree of the EGR valve 30 may be detected by an EGR sensor. In this case, the throttle sensor detects the rotation angle of the throttle valve 14 about its rotary shaft. Since the EGR valve 30 moves in the axial direction for adjusting the opening degree of the valve hole, the EGR sensor detects the amount of axial movement of the EGR valve 30, or the lift amount of the EGR valve 30. When the difference between the actual throttle valve opening degree, which is detected by the throttle sensor, and the target throttle valve opening degree EACCPF is equal to or greater than a predetermined threshold level for a predetermined period, the throttle valve 14 may be judged to be malfunctioning. Also, when the difference between the EGR opening degree, which is detected by the EGR sensor, and the target EGR valve opening degree DEFIN is equal to or greater than a predetermined threshold level for a predetermined period, the EGR valve 30 may be judged to be malfunctioning. The threshold levels are obtained through experiments such that neither the throttle valve opening degree nor the EGR opening degree reaches the corresponding threshold level when in the normal state. The predetermined periods are obtained through experiments such that a malfunction of the valves 14, 30 is not erroneously detected. Alternatively, the upper limit value QFULL may be changed in accordance with the difference between the actual valve opening degree and the target valve opening degree.

Further, at least one of the valves 14, 30 may be judged to be malfunctioning when the difference $\Delta$GN between the target intake air amount GNTRG and the actual intake air amount GN is equal to or greater than a predetermined threshold level for predetermined period. The threshold level is obtained through experiments such that the difference $\Delta$GN does not reach the threshold level when the valves 14, 30 are in the normal state. The predetermined period is obtained through experiments such that a malfunction of the valves 14, 30 is not erroneously detected.

The present invention may be embodied in an in-cylinder fuel injection type gasoline engine.

In the illustrated embodiments, the present invention is applied to a diesel engine having a common rail. However, the present invention may be applied to a diesel engine having a different system such as a distributor type injection system and an in-line fuel injection system.

Therefore, the present examples and embodiments are to be considered as illustrative and not restrictive and the invention is not to be limited to the details given herein, but may be modified within the scope and equivalence of the appended claims.

Fuel injection amount is limited below an upper limit value so that the fuel injection amount is prevented from being excessive in relation to the intake air amount supplied to a diesel engine. When a throttle valve or an EGR valve is judged to be malfunctioning, a map for computing the upper limit value is switched from a normal map to an abnormal map. When computed with the abnormal map, the upper limit value is less than when computed with the normal map. As a result, the fuel injection amount is always limited by the appropriate upper limit value. Even if the throttle valve or the EGR valve is malfunctioning, the generation of exhaust smoke is reliably suppressed.

**Claims**

1. An apparatus for controlling the amount of fuel supplied to an internal combustion engine, wherein the apparatus limits the fuel supply amount to no more than an upper limit value to prevent the fuel supply amount from being excessive in relation to the amount of intake air supplied to the engine, the apparatus **being characterized by:**

   means for judging whether the actual intake air amount is different from a required intake air amount or whether there is a possibility that the actual intake air amount will be different from the required intake air amount; and
   means for switching the upper limit value in accordance with the judgment result of the judging means.

2. The apparatus according to claim 1, **characterized in that** the engine includes means for adjusting the amount of intake air supplied to the engine according to the running state of the engine, and wherein the judging means judges whether the adjusting means is malfunctioning or whether there is a possibility that the adjusting means is malfunctioning.

3. The apparatus according to claim 2, **characterized in that** the adjusting means includes at least one of a throttle valve, which adjusts the opening degree of an intake passage connected to a combustion chamber of the engine, and an EGR valve, which adjusts EGR amount, or the amount of exhaust gas recirculated to the combustion chamber.

4. The apparatus according to claim 3, **characterized in that** the EGR valve is feedback controlled such that the actual EGR amount seeks a target EGR amount, which is determined according to the running state of the engine, and wherein the judging means judges whether the EGR valve is malfunctioning or whether there is a possibility that the EGR valve is malfunctioning based on the difference between the actual EGR amount and the target EGR amount or on a value that represents the difference.

5. An apparatus for controlling the amount of fuel supplied to an internal combustion engine, wherein the apparatus limits the fuel supply amount to no more than an upper limit value to prevent the fuel supply amount from being excessive in relation to the amount of intake air supplied to the engine, the apparatus **being characterized by:**

   means for changing the upper limit value according to the difference between the actual intake air amount and a required intake air amount.

6. The apparatus according to claim 5, **characterized in that** the engine includes means for adjusting the amount of intake air supplied to the engine according to the running state of the engine, and wherein the changing means changes the upper limit value according to the degree of an adjustment error of the intake air amount controlled by the adjusting means.

7. The apparatus according to claim 6, **characterized in that** the adjusting means includes at least one of a throttle valve, which adjusts the opening degree of an intake passage connected to a combustion chamber of the engine, and an EGR valve, which adjusts EGR amount, or the amount of exhaust gas recirculated to the combustion chamber.

8. The apparatus according to claim 7, **characterized in that** the EGR valve is feedback controlled such that the actual EGR amount seeks a target EGR amount, which is determined according to the running state of the engine, and wherein the changing means changes the upper limit value according to the difference between the actual EGR amount and the target EGR amount or on a value that represents the difference.

9. The apparatus according to any one of claims 1 to 8, **characterized in that** the upper limit value is computed based on the speed of the engine and the actual intake air amount.

10. The apparatus according to any one of claims 1 to 9, **characterized in that,** when the actual intake air amount is less than a required intake air amount or when there is a possibility that the actual intake air amount will be less than the required intake air amount, the upper limit value is set lower than a case in which the actual intake air amount is equal to the required intake air amount.

11. The apparatus according to any one of claims 1 to 9, **characterized in that,** when the actual intake air amount is greater than a required intake air amount or when there is a possibility that the actual intake air amount will be greater than the required intake air amount, the upper limit value is set higher than a case in which the actual intake air amount is equal to the required intake air amount.

12. The apparatus according to any one of claims 1 to 9, **characterized in that,** when the actual intake air amount is different from a required intake air amount or when there is a possibility that the actual intake air amount will be different from the required intake air amount, the upper limit value is set lower than the other cases.

13. The apparatus according to any one of claims 1 to 9, **characterized in that,** when the difference between the actual intake air amount and a required intake air amount or a value that represents the difference is greater than a predetermined value, the upper limit value is set lower than the other cases.

14. The apparatus according to any one of claims 1 to 13, **characterized in that** the apparatus computes a basic fuel supply amount based on the speed of the engine and the load acting on the engine, and wherein, when the basic fuel supply amount surpasses the upper limit value, the apparatus sets the upper limit value as the basic fuel supply amount.

15. The apparatus according to claim 14, **characterized in that** the apparatus uses the degree of depression of an acceleration pedal, which is provided in the vehicle, as a value that represents the load acting on the engine.

16. The apparatus according to any one of claims 1 to 15, **characterized in that** the engine is a diesel engine.

# Fig.1

EP 1 234 970 A2

# Fig.2

```
        ┌─────────────────────┐
        │   Fuel injection    │
        │  amount control     │
        └─────────────────────┘
                   │
        ┌─────────────────────────────┐
        │ Read GN, NE, ACCPF, SFT, SPD │ ～ S110
        └─────────────────────────────┘
                   │
        ┌─────────────────────────────┐
        │ QGOV1←Map (NE, ACCPF)        │ ～ S120
        └─────────────────────────────┘
                   │
        ┌─────────────────────────────┐
        │ QGOV2←Map (NE, ACCPF)        │ ～ S130
        └─────────────────────────────┘
                   │
        ┌─────────────────────────────┐
        │ QGOV3←Map (NE, ACCPF)        │ ～ S140
        └─────────────────────────────┘
                   │                    ～ S150
              ┌──────────────────┐
         NO  /  Non-idling state  \  YES
        ◄───(   (State other       )───►
            \    than idling)     /
              \       ?          /
                └──────────────┘
                          │ YES
  S160 ┌──────────────────┐
       │  NEDL←NTRG−NE     │
       └──────────────────┘
  S170 ┌──────────────────┐
       │ QIIDL←Map (NEDL)  │
       └──────────────────┘
  S180 ┌──────────────────┐
       │ QII←QII±QIIDL     │
       └──────────────────┘
                   │                              ～ S190
 ┌──────────────────────────────────────────────────────────────┐
 │ QGOV←MAX (QGOV1+QII+QIP, MAX (QGOV2, QGOV3) +QIPB)             │
 └──────────────────────────────────────────────────────────────┘
                   │                ～ S200
              ◇─────────────────◇
             / Vehicle speed     \  NO
            (   changing?         )───┐
             \                   /    │
              ◇─────────────────◇     │
                   │ YES  ～ S210      │
       ┌───────────────────────────┐  │
       │ Change suppression of QGOV │  │
       └───────────────────────────┘  │
                   │◄─────────────────┘
                   ▼
                  (1)
```

# Fig.3

**Fig.4(A)**

QGOV1 — ACCPF : Great — Small — NE — O

**Fig.4(B)**

QGOV2 — ACCPF : Great — Small — NE — O

**Fig.4(C)**

QGOV3 — ACCPF : Great — Small — NE — O

# Fig.5

QFULL computation

S231

XEGRerr=OFF ?

NO

YES

S232

XTHRerr=OFF ?

NO

YES S233

Compute QFULL from normal upper limit value map

S234

Compute QFULL from abnormal upper limit value map

Return

# Fig.6(A)

(Normal)

# Fig.6(B)

(Abnormal)

# Fig.7

Opening degree control

Read GN, NE, ACCPF — S310

Compute EACCPF based on NE and ACCPF — S320

Compute λTRG based on NE and QGOV — S330

GNTRG←λTRG×QGOV — S340

ΔGN←GN−GNTRG — S350

Compute DEFIN based on ΔGN — S360

Return

# Fig.8

# Fig.9

# Fig.10

EGR valve
abnormality test

abnormality
detection
condition
satisfied? ⌐ S510

NO

YES

Abnormality test ⌐ S520

S530

EGR valve
abnormal?

NO

YES  S540

XEGRerr←ON

Return

# Fig.11

QFULL computation

$\Delta F/B \leftarrow 100 \times \Delta GN/GNTRG$ ⌐ S610

Compute Kupper ⌐ S620

Compute QFULL base ⌐ S630

QFULL←QFULLbase×Kupper ⌐ S640

Return

# Fig.12

[Kupper]

| NE (rpm) ΔF/B | 1000 | 2000 | 3000 | 4000 |
|---|---|---|---|---|
| <-50% | 0.30 | 0.30 | 0.30 | 0.30 |
| -50% | 0.50 | 0.55 | 0.60 | 0.65 |
| -25% | 0.75 | 0.80 | 0.85 | 0.90 |
| 0% | 1.00 | 1.00 | 1.00 | 1.00 |
| 25% | 1.25 | 1.30 | 1.35 | 1.40 |
| 50% | 1.50 | 1.55 | 1.60 | 1.65 |
| >50% | 1.00 | 1.00 | 1.00 | 1.00 |

# Fig.13

[Kupper]

| NE (rpm) ΔF/B | 1000 | 2000 | 3000 | 4000 |
|---|---|---|---|---|
| <-50% | 0.30 | 0.30 | 0.30 | 0.30 |
| -50% | 0.50 | 0.55 | 0.60 | 0.65 |
| -25% | 0.75 | 0.80 | 0.85 | 0.90 |
| 0% | 1.00 | 1.00 | 1.00 | 1.00 |
| 25% | 1.25 | 1.30 | 1.35 | 1.40 |
| 50% | 1.50 | 1.55 | 1.60 | 1.65 |
| >50% | 0.30 | 0.30 | 0.30 | 0.30 |

# Fig.14

[Kupper]

| NE (rpm)<br>ΔF/B | 1000 | 2000 | 3000 | 4000 |
|---|---|---|---|---|
| <-50% | 0.30 | 0.30 | 0.30 | 0.30 |
| -50% | 0.50 | 0.55 | 0.60 | 0.65 |
| -25% | 0.75 | 0.80 | 0.85 | 0.90 |
| ≧0% | 1.00 | 1.00 | 1.00 | 1.00 |

# Fig.15

[Kupper]

| NE (rpm)<br>ΔF/B | 1000 | 2000 | 3000 | 4000 |
|---|---|---|---|---|
| <-50% | 0.30 | 0.30 | 0.30 | 0.30 |
| -50% | 0.50 | 0.55 | 0.60 | 0.65 |
| -25% | 0.75 | 0.80 | 0.85 | 0.90 |
| 0% | 1.00 | 1.00 | 1.00 | 1.00 |
| 25% | 1.00 | 1.00 | 1.00 | 1.00 |
| 50% | 1.00 | 1.00 | 1.00 | 1.00 |
| >50% | 0.30 | 0.30 | 0.30 | 0.30 |